# EUROPÄISCHE PATENTSCHRIFT

(11) **EP 1 780 050 B1**
(45) Veröffentlichungstag und Bekanntmachung des Hinweises auf die Patenterteilung: **23.04.2008**
(21) Anmeldenummer: 06022109.0
(22) Anmeldetag: 21.10.2006
(51) Int. Cl.: B60B 35/00, B60G 9/00

(54) **Starrachskörper eines Kraftfahrzeugs, insbesondere Nutzfahrzeugs**
Body of a rigid axle of a motor vehicle, particularly of a utility vehicle
Corps d' un essieu rigide de véhicule automobile, notamment de véhicule utilitaire

(30) Priorität: 29.10.2005 DE 102005051907
(43) Veröffentlichungstag der Anmeldung: 02.05.2007
(73) Patentinhaber: MAN Nutzfahrzeuge Aktiengesellschaft, 80976 München (DE)
(72) Erfinder: Simon, Bernhard, 85435 Erding (DE); Landsherr, Thomas, 80995 München (DE)

(56) Entgegenhaltungen:
- US-A- 274 341
- US-A- 609 925
- US-A- 744 116
- US-A- 776 022
- US-A- 800 928
- US-A- 1 120 933
- US-A- 1 172 111
- US-A- 1 287 408
- US-A- 3 095 242
- US-A- 4 310 200

## Beschreibung

Die Erfindung betrifft einen Starrachskörper eines Kraftfahrzeugs, insbesondere Nutzfahrzeugs nach dem Oberbegriff des Patentanspruches 1.

Ein derartiger Starrachskörper besitzt an seinen Achskörperenden Radträgeranschlussstellen und dazwischen angeordnete Gewichtsaufnahmestellen, welche vom Fahrzeugrahmen und Fahrzeugaufbau kommende Gewichtskräfte, die über ein Federsystem oder Feder-/Dämpfersystem übertragen werden können, aufnehmen. Während des Fahrbetriebs ist der Starrachskörper hohen statischen und dynamischen Belastungen ausgesetzt. Ferner muss Verwindungssteifigkeit gewährleistet sein, auf die es insbesondere bei Bremsvorgängen im vollbeladenen Zustand des Fahrzeugs ankommt. Hieraus resultieren hohe Stückgewichte, insbesondere beim Einsatz in Nutzfahrzeugen.

Ein Starrachskörper mit Versteifungsgestänge ist schon bekannt. Ein solcher Starrachskörper wird in jedem der Dokumente US 4 310 200, US 800 928, US 1 172 111, und US 609 925 beschrieben. Die Versteifungsgestänge sind schwer, und bei Vorspannung dehnbar.

Aufgabe der Erfindung ist, es einen Starrachskörper der eingangsgenannten Art zu schaffen, der einerseits den hohen statischen und dynamischen Belastungen, während des Fahrbetriebs gewachsen ist und bei dem andererseits eine Gewichtsreduzierung erreicht wird.

Diese Aufgabe wird durch die Merkmale des Patentanspruches 1 gelöst.

Beim erfindungsgemäßen Starrachskörper kommen Seile, insbesondere Drahtseile zum Einsatz, welche zu beiden Seiten einer vertikalen Achskörper-Längsmittelebene in Achskörper-Längsrichtung sich erstrecken und in der Nähe der Achskörperenden am Achskörper befestigt sind. Die Seile liegen mit mechanischer Vorspannung an Gewichtsübertragungsstellen am Achskörper an. Diese Gewichtsübertragungsstellen befinden sich zwischen den Seilbefestigungsstellen, mit denen die Seilenden am Achskörper befestigt sind. Vorzugsweise kommen zwei Drahtseile zum Einsatz, die beidseits der Achskörper-Längsmittelebene sich in Längsrichtung des Achskörpers erstrecken. Bei den Seilen handelt es sich um weitgehend dehnungsarme Seile, die nach der Montage und Beaufschlagung mit der Vorspannung im wesentlichen ihre konstante Strecklänge beibehalten. Geeignete Seile sind drehungsfreie Hubdrahtseile, beispielsweise Spiral-Rundlitzenseile.

An den Gewichtskraftübertragungsstellen werden die Seile in Seilführungen gegen seitliche Auslenkung geführt. In bevorzugter Weise sind die Gewichtskraftübertragungsstellen in der Achskörpermitte und symmetrisch zur Achskörpermitte angeordnet. Hierzu können drei Gewichtskraftübertragungsstellen am Starrachskörper vorgesehen sein.

Die beiden außerhalb der Achskörpermitte angeordneten Gewichtsübertragungsstellen sind vorzugsweise zwischen den Seilbefestigungsstellen und den Gewichtsaufnahmestellen angeordnet. Hierdurch wird eine effektive Übertragung der Gewichtskräfte auf die Fahrzeugräder erreicht.

Vorzugsweise kann die in der Achskörpermitte angeordnete Gewichtskraftübertragungsstelle als Spanneinrichtung ausgebildet sein, mit welcher die mechanische Vorspannung, mit der die Seile an den Gewichtskraftübertragungsstellen des Starrachskörpers anliegen, erzeugt wird.

Ferner ist die in der Achskörpermitte angeordnete Gewichtskraftübertragungsstelle als Wippe ausgebildet, welche beim Bremsen eine Schwenkbewegung der Gewichtskraftübertragungsstellen, an denen die beiden Seile anliegen, um einen am Achskörper ortsfesten und in der Achskörper-Längsmittelebene liegenden Drehpunkt zu gewährleisten. Hierzu ist zwischen den Gewichtskraftübertragungsstellen und dem Achskörper, vorzugsweise ein Kugelgelenk vorgesehen.

Die oben beschriebene Anordnung von drei Gewichtskraftübertragungsstellen kommt vorzugsweise bei Vorderachsen sowie Vor-, Nachlauf-, Mittel- und Hinterachsen zum Einsatz. Bei Hinterachsen mit mittig angeordnetem Getriebegehäuse sind vorzugsweise vier Gewichtskraftübertragungsstellen am Achskörper vorgesehen. Dabei können zwei beidseits des Getriebegehäuses angeordnete Gewichtsübertragungsstellen als Spannvorrichtungen zur Erzeugung der Vorspannung für die Drahtseile ausgebildet sein.

Der Achskörper kann in herkömmlicher Weise als Schmiedeteil hergestellt sein, wobei aufgrund der Belastungsaufnahme durch die Drahtseile ein Einfach-T-Profil für den Achskörper ausreicht. Ferner kann aufgrund der reduzierten Belastung der Achskörper auch als Gussteil hergestellt werden. Da die vom Fahrzeugrahmen und Fahrzeugaufbau kommenden Gewichtskräfte sowie dynamischen Belastungen während des Fahrbetriebs über die Drahtseile auf die Fahrzeugräder übertragen werden, lässt sich eine erhebliche Gewichtsreduzierung in der Größenordnung von 25% gegenüber herkömmlichen Starrachskörpern erzielen.

Anhand der Figuren wird an Ausführungsbeispielen die Erfindung noch näher erläutert. Es zeigt:
- Figur 1: in perspektivischer Darstellung ein erstes Ausführungsbeispiel der Erfindung,
- Figur 2: das in Figur 1 dargestellte Ausführungsbeispiel in Seitenansicht,
- Figur 3: das in Figur 1 dargestellte Ausführungsbeispiel in Draufsicht,
- Figur 4: eine schnittbildliche Darstellung der mittleren Gewichtskraftübertragungsstelle, entlang eine Schnittlinie A-A in Figur 2
- Figur 5: eine schnittbildliche Darstellung einer außerhalb der Achskörpermitte angeordneten Gewichtkraftübertragungsstelle, entlang einer Schnittlinie B-B, in Figur 2
- Figur 6: eine Seitenansicht eines weiteren Ausführungsbeispiels der Erfindung und
- Figur 7: eine schnittbildliche Darstellung einer Gewichtskraftübertragungsstelle beim Ausführungsbeispiel der Figur 6 entlang einer Schnittlinie C-C.

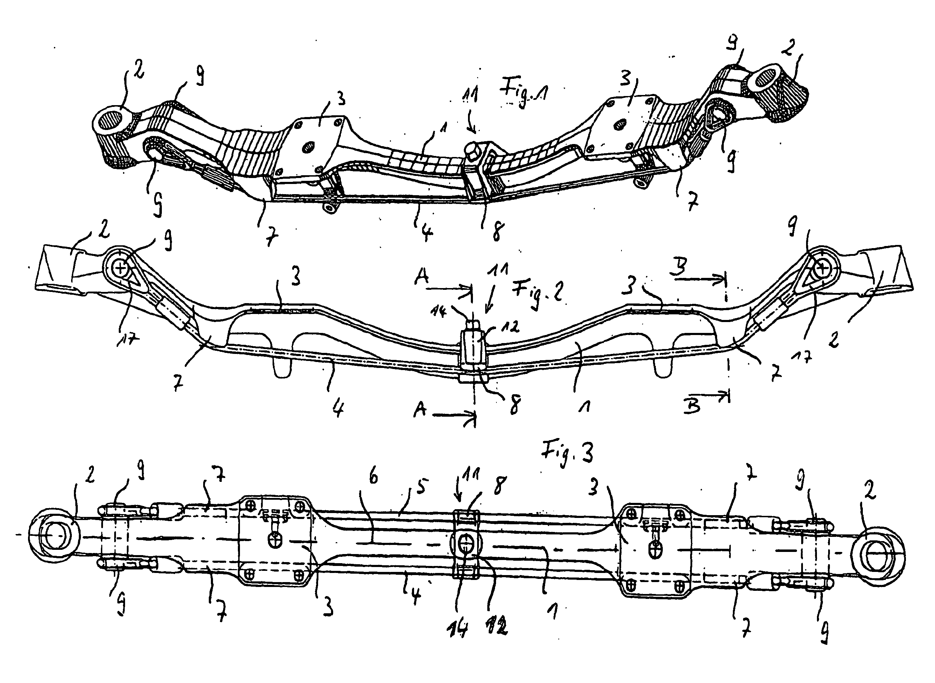

Bei dem Ausführungsbeispiel der Figuren 1 bis 5 handelt es sich um einen Starrachskörper für eine Vorderachse eines Nutzfahrzeugs. Dieser beinhaltet einen starren Achskörper 1, welcher nach unten gekröpft ist. An den Achskörperenden sind Radträgeranschlussstellen 2 vorgesehen. Mit Hilfe von nicht näher darstellten Achsschenkelbolzen können in bekannter Weise Achsschenkel von Radträgern schwenkbar in den Radträgeranschlussstellen 2 gelagert werden.

Zwischen den Achskörperenden sind an die Oberseite des Achskörpers 1, welcher ein Einfach-T-Profil aufweist, flächige Gewichtsaufnahmestellen 3 angeformt. An diesen Gewichtsaufnahmestellen 3 können Elemente eines zwischen dem Fahrzeugrahmen und dem Achskörper 1 vorgesehenen Federsystems oder Feder-/Dämpfungssystems befestigt werden. In diese Gewichtsaufnahmestellen werden die vom Fahrzeugrahmen und Fahrzeugaufbau kommenden Gewichtskräfte und während des Fahrbetriebs von dort ausgehenden dynamischen Belastungen in den Achskörper 1 eingeleitet.

In Längsrichtung zum Achskörper 1 erstrecken sich zu beiden Seiten einer vertikalen Achskörper-Längsmittelebene 6 zwei Drahtseile 4 und 5. Die beiden Drahtseile 4 und 5 sind mit gleichen Abständen von der Achskörper-Längsmittelebene 6 angeordnet. Die Enden der Drahtseile 4 und 5 sind in unmittelbarer Nähe zu den Radträgeranschlussstellen 2 am Achskörper 1 in Seilbefestigungsstellen 9 befestigt. Die Seilbefestigungsstellen werden von durch den Achskörper 1 gesteckten Bolzen gebildet, um die an den Seilenden vorgesehene Drahtseilschlaufen geschlungen sind. An den Innenseiten der Drahtseilschlaufen sind zur Verstärkung Kauschen 17 vorgesehen. Die überstehenden Bolzenenden weißen Rillen auf, in die die Kauschen 17 an den Seilenden eingelegt sind. Hierdurch wird eine seitliche Führung der Seilenden an den Befestigungsstellen 9 erreicht.

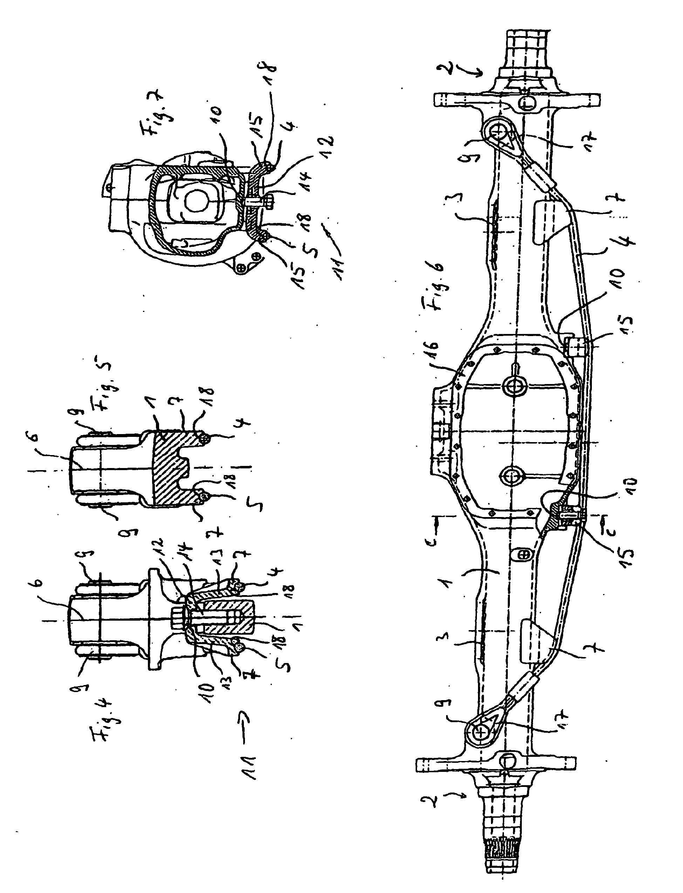

An den Achskörper sind zwischen den Seilbefestigungsstellen 9 und den Gewichtsaufnahmestellen 3, Gewichtskraftübertragungsstellen 7 angeformt. Diese Gewichtskraftübertragungsstellen 7 können wie in Figur 5 dargestellt ist, in Form von nach unten ragenden Schenkeln eines etwa U-förmigen Profilabschnitts des Achskörpers 1 ausgebildet sein. In den unten liegenden Enden dieser Schenkel sind Seilführungsrillen eingeformt, in denen die Drahtseile 4 und 5 gesichert gegen seitliche Auslenkungen geführt sind.

In der Mitte der nach unten ragenden Kröpfung des starren Achskörpers 1 befindet sich eine weitere Gewichtskraftübertragungsstelle 8. Diese Gewichtskraftübertragungsstelle ist ferner als Spanneinrichtung 11 ausgebildet. Die beiden Drahtseile 4 und 5 sind ebenfalls in Führungsrillen zur seitlichen Führung angeordnet. Die Führungsrillen 18 befinden sich an den unteren Enden von Spannschenkeln 13, eines etwa U-förmigen Spannbügels 12. Der Spannbügel 12 und die Spannschenkel 13 sind in vertikaler Richtung mittels einer Spannschraube 14 verstellbar am Achskörper 1 gelagert. Hierdurch kann auf die Drahtseile 4 und 5 eine mechanische Vorspannung aufgebracht werden. Mit dieser mechanischen Vorspannung liegen die Drahtseile 4 und 5 in den Führungsrillen 18 der nach unten ragenden Schenkel der Gewichtskraftübertragungsstellen 7 und 8 an.

Der Spannbügel 12 der Spanneinrichtung 11 ist als Wippe ausgebildet und in einem Kugelgelenk 10 am Achskörper 1 gelagert. Der Mittelpunkt des Kugelgelenkes liegt in der vertikalen Längsmittelebene 6 und der Achse der Spannschraube 14. Die Spannschraube 14 ist mit ihrem Schaft in ein Gewinde des Achskörpers 1 eingesetzt. Beim dargestellten Ausführungsbeispiel der Figur 4 befindet sich das Kugelgelenk unterhalb des Schraubenkopfes zwischen dem Schaft der Spannschraube 14 und dem oben liegenden Verbindungssteg des U-förmigen Spannbügels 12. Dynamische Belastungen, welche vom Fahrzeugrahmen und Fahrzeugaufbau beim Bremsen ausgehen, führen zu einer geringfügigen Schwenkbewegung, um den vom Kugelgelenk 1 gebildeten Gelenkpunkt in Richtung der auftretenden Reaktionskräfte. Diese werden von den gespannten Drahtseilen 4 und 5 aufgenommen.

Statische Gewichtskräfte werden im Wesentlichen, im Bereich der Gewichtsübertragungsstellen 7, welche in der Nähe der Gewichtsaufnahmestellen 3 und der Seilbefestigungsstellen 9 vorgesehen sind, auf die Drahtseile 4 und 5 übertragen. An der mittleren Gewichtskraftübertranungsstelle 8 wird ein geringerer Teil der Gewichtskräfte übertragen. Von den gespannten Drahtseilen werden die Gewichtskräfte über die Seilverbindungsstelle 9 und die Radträgeranschlussstellen 2 in die Kraftfahrzeugräder geleitet. Dabei wird ein wesentlicher Anteil des Gewichtskraftflusses zwischen den Gewichtsaufnahmestellen 3 und den Radträgeranschlussstellen 2 von den Drahtseilen 4 und 5 übernommen.

In den Figuren 6 und 7 ist der Achskörper 1 für die Verwendung bei einer angetriebenen Achse, insbesondere Hinterachse eines Nutzfahrzeugs ausgebildet. In der Mitte des Achskörpers 1 ist ein Getriebegehäuse 16 angeformt. An den Enden angeformte Achsstummel bilden Radträgeranschlussstellen 2. Wie beim Ausführungsbeispiel der Figuren 1 bis 5 sind die Gewichtskraftübertragungsstellen 7 in Form von plattenförmigen nach unten ragenden Schenkeln an den Achskörper 1 angeformt. Wie beim in der Figur 5 dargestellten Ausführungsbeispiel wird ein im wesentlichen U-förmiges Profil, in diesem Bereich am Achskörper 1 gebildet. Die Drahtseile 4 und 5 werden ebenfalls in Führungsrillen 18 an den unteren Enden der die Gewichtskraftübertragungsstellen 7 bildenden plattenförmigen Schenkel geführt. Die Gewichtskraftübertragungsstellen 7 sind unterhalb der Gewichtsaufnahmestellen 3 in der Nähe der Seilbefestigungsstelle 9 vorgesehen. Sie befinden sich am unteren Teil des Profils des Achskörpers 1. Die Seilbefestigungsstellen 9 befinden sich oberhalb etwa in der Ebene der Gewichtsaufnahmestellen 3, am Achskörper 1.

Wie beim Ausführungsbeispiel der Figuren 1 bis 5 wird hierdurch ein Umlenkwinkel im Verlauf der Drahtseile 4 und 5 ausgehend von der Drahtseilmitte zu den Drahtseilenden an den Seilbefestigungsstellen 9 hin, gebildet. Je größer dieser Umlenkwinkel gegenüber der Horizontalen ist, umso günstiger ist die Krafteinleitung von den Gewichtskraftübertragungsstellen 7 in die Seilbefestigungsstellen 9. Die Bemessung dieses Umlenkwinkel hängt jedoch von den Einbauvorgaben an der jeweiligen Achse ab.

Anstelle der mittleren Gewichtskraftübertragungsstelle 8 des oben beschriebenen Ausführungsbeispiels befinden sich beidseits des Getriebegehäuses 16 für jedes Drahtseil 4, 5 zwei Gewichtskraftübertragungsstellen 15, am Achskörper. Die Gewichtskraftübertragungsstellen 15 sind ebenfalls als Spanneinrichtungen 11 mit Wippenfunktion ausgebildet.

Wie aus Figur 7 zu ersehen ist, ist die Spannschraube 14 bei dieser Ausführungsform in ein Gewinde des Spannbügels 12 eingesetzt und stützt sich an ihrem oberen Schaftende über das Kugelgelenk 10 an der Unterseite des Achskörpers 1 in unmittelbarer Nähe zum Getriebegehäuse 16 ab. Die beiden Drahtseile 4 und 5 werden ebenfalls in Führungsrillen, der nach unten ragenden plattenförmigen Schenkel, welche zur Gewichtskraftübertragung auf die Drahtseile 4, 5 vorgesehen sind, geführt. Beim Verstellen der Spannschraube 14 wird der Spannbügel 12 gegenüber dem Getriebegehäuse 16 bzw. Achskörper 1 in vertikaler Richtung verschoben. Auf diese Weise lassen sich die beiden Drahtseile 4 und 5 vorspannen bzw. straffen.

### Bezugszeichenliste

- 1: Achskörper
- 2: Radträgeranschlussstellen
- 3: Gewichtsaufnahmestellen
- 4, 5: Drahtseile
- 6: Längsmittelebene
- 7, 8: Gewichtskraftübertragungsstellen
- 9: Seilbefestigungsstellen
- 10: Kugelgelenk
- 11: Spanneinrichtung
- 12: Spannbügel
- 13: Spannschenkel
- 14: Spannschraube
- 15: Gewichtskraftübertragungsstellen
- 16: Getriebegehäuse
- 17: Kauschen
- 18: Seilführungsrillen

## Patentansprüche

1. Starrachskörper eines Kraftfahrzeugs, insbesondere Nutzfahrzeugs mit Radträgeranschlussstellen an den Achsköperenden und dazwischen angeordneten Gewichtsaufnahmestellen zur Aufnahme der vom Fahrzeugrahmen und Fahrzeugaufbau kommenden statischen und dynamischen Belastungen, **dadurch gekennzeichnet, dass** Drahtseile (4, 5), welche zu beiden Seiten einer vertikalen Achsköfper-Längsmittelebene (6) sich in Achskörper-Längsrichtung erstrecken, in der Nähe der Achskörperenden am Achskörper (1) in Seilbefestigungsstellen (9) befestigt sind und mit mechanischer Vorspannung an Gewichtskraftübertragungsstellen (7. 8: 15) am Achskörper anliegen.

2. Starrachskörper nach Anspruch 1, **dadurch gekennzeichnet, dass** die Drahtseile (4, 5) an den Gewichtskraftübertragungsstellen (7, 8; 15) In Seilführungen gegen seitliche Auslenkung geführt sind.

3. Starrachskörper nach Anspruch 1 oder 2, **dadurch gekennzeichnet, dass** die Gewichtskraftübertragungsstellen (7, 8) In der Achskörpermitte und symmetrisch zur Achskörpermitte angeordnet sind.

4. Starrachskörper nach einem der Ansprüche 1 bis 3, **dadurch gekennzeichnet, dass** die symmetrisch zur Achskörpermitte angeordneten Gawichtskraftübertragungsstellen (7) zwischen den Seilbefestigungsstellen (9) und den Gewichtsaufnahmestellen (3) angeordnet sind.

5. Starrachskörper nach einem der Ansprüche 1 bis 4, **dadurch gekennzeichnet, dass** die in der Achskörpermitte angeordnete Gewichtskraftübertragungsstelle (8) als Wippe ausgebildet ist.

6. Starrachskörper nach Anspruch 5, **dadurch gekennzeichnet, dass** die Wippe ein Kugelgelenk (10) aufweist.

7. Starrachskörper nach einem der Ansprüche 1 bis 6, **dadurch gekennzeichnet, dass** an der in der Achskörpermitte angeordneten Gewichtskraftübertragungsstelle (8) eine Spanneinrichtung (11) vorgesehen ist, mit welcher die mechanische Vorspannung erzeugt wird.

8. Starrachskörper nach einem der Ansprüche 1 bis 7, **dadurch gekennzeichnet, dass** die Gewichtskraftübertragungsstellen (7) als am Achsprofil angeformte, plattenförmige Stützen ausgebildet sind, in deren unten liegenden Enden jeweils die Seilführungen vorgesehen sind.

9. Starrachskörper nach Anspruch 8, **dadurch gekennzeichnet, dass** der Querschnitt des Achsprofils im Bereich der angeformten Stützen etwa eine U-Form aufweist.

10. Starrachskörper nach einem der Ansprüche 1 bis 7, **dadurch gekennzeichnet, dass** die in der Achskörpermitte angeordnete Gewichtskraftübertragungsstelle (8) von der Spanneinrichtung (11) gebildet ist.

11. Starrachskörper nach einem der Ansprüche 1 bis 10, **dadurch gekennzeichnet, dass** die Spanneinrichtung (11) einen etwa U-förmigen Spannbügel (12) mit beidseitigen Spannschenkeln (13) aufweist, wobei in den Enden der Spannschenkel (13) die Seitführungen (18) vorgesehen sind, und dass der Spannbügel (12) mittels einer Spannschraube (14) gegenüber dem Achskörper (1) zum Spannen der Drahtseile (4, 5) verstellbar ist.

12. Starrachskörper nach Anspruch 6 und 11, **dadurch gekennzeichnet, dass** das Kugelgelenk (10) zwischen der Spannschraube (14) und dem Spannbügel (12) vorgesehen ist.

13. Starrachskörper nach Anspruch 6 und 11. **dadurch gekennzeichnet, dass** das Kugelgelenk (10) zwischen der Spannschraube (14) und dem Achskörper (1) vorgesehen ist.

14. Starrachskörper nach einem der Ansprüche 11 bis 13, **dadurch gekennzeichnet, dass** die Spannschraube (14) in ein Gewinde des Achskörpers (1) oder des Spannbügels (12) eingeschraubt ist.

15. Starrachskörper nach einem der Ansprüche 1 bis 14, **dadurch gekennzeichnet, dass** der Achskörper (1) nach unten gekröpft ist und die Spanneinrichtung (11) in der Mitte der Köpfung angeordnet ist.

16. Starrachskörper nach einem der Ansprüche 1 bis 14, **dadurch gekennzeichnet, dass** der Achskörper (1) in seinem mittleren Bereich ein Getriebegehäuse (16) aufweist, zu dessen beiden Seiten Gewichtskraftübertragungsstellen (15) mit Spanneinrichtungen (11) angeordnet sind.

17. Starrachskörper nach einem der Ansprüche 1 bis 16, **dadurch gekennzeichnet, dass** die Drahtseite (4, 5) dehnungsarme Drahtseile sind.

## Claims

1. Rigid-axle body of a motor vehicle, particularly a commercial vehicle, with wheel-carrier connecting parts at the ends of the axle body and weight support points arranged between said ends for absorbing the static and dynamic loads from the vehicle frame and vehicle body, **characterised in that** wire cables (4, 5) extend along the axle body on both sides of a vertical axle-body longitudinal centre plane (6), are fastened to the axle body (1) in wire-cable fastening points (9) in the vicinity of said ends of the axle body and contact the weight force transmission points (7, 8; 15) on the axle body with mechanical preload.

2. Rigid-axle body according to Claim 1, **characterised in that** the wire cables (4, 5) are located in wire-cable guides at the weight force transmission points (7, 8; 15) to prevent lateral deflection.

3. Rigid-axle body according to Claim 1 or 2, **characterised in that** the weight force transmission points (7, 8) are located in the centre of the axle body and arranged symmetrically relative to the centre of the axle body.

4. Rigid-axle body according to one of the Claims 1 to 3, **characterised in that** the weight force transmission points (7) arranged symmetrically relative to the centre of the axle body are located between the wire-cable fastening points (9) and the weight support points (3).

5. Rigid-axle body according to one of the Claims 1 to 4, **characterised in that** the weight force transmission point (8) arranged in the centre of the axle body is designed as a rocker.

6. Rigid-axle body according to Claim 5, **characterised in that** the rocker features a ball-and-socket joint (10).

7. Rigid-axle body according to one of the Claims 1 to 6, **characterised in that** a tensioning device (11) is provided at the weight force transmission point (8) arranged in the centre of the axle body, with which tensioning device (11) the mechanical preload can be generated.

8. Rigid-axle body according to one of the Claims 1 to 7, **characterised in that** the weight force transmission points (7) are designed as plate-type supports moulded on to the axle section, in the lower ends of which supports the wire cable guides are provided.

9. Rigid-axle body according to Claim 8, **characterised in that** the cross-section of the axle section features an approximately U-type design in the area of the moulded supports.

10. Rigid-axle body according to one of the Claims 1 to 7, **characterised in that** the tensioning device (11) constitutes the weight force transmission point (8) arranged in the centre of the axle body.

11. Rigid-axle body according to one of the Claims 1 to 10, **characterised in that** the tensioning device (11) features an approximately U-shaped tensioning bow (12) with tensioning legs (13) on either side, whereby the wire cable guides (18) are provided in the ends of the tensioning legs (13) and the tensioning bow (12) can be adjusted for tensioning the wire cables (4, 5) by means of a tensioning bolt (14) arranged opposite the axle body (1).

12. Rigid-axle body according to the Claims 6 and 11, **characterised in that** the ball-and-socket joint (10) is provided between the tensioning bolt (14) and the tensioning bow (12).

13. Rigid-axle body according to the Claims 6 and 11, **characterised in that** the ball-and-socket joint (10) is provided between the tensioning bolt (14) and the axle body (1).

14. Rigid-axle body according to one of the Claims 11 to 13, **characterised in that** the tensioning bolt (14) is screwed into a thread provided in the axle body (1) or in the tensioning bow (12).

15. Rigid-axle body according to one of the Claims 1 to 14, **characterised in that** the axle body (1) is dropped downwards and the tensioning device (11) is arranged in the centre of the dropped portion.

16. Rigid-axle body according to one of the Claims 1 to 14, **characterised in that** in its central area the axle body (1) features a gear housing (16), whereby weight force transmission points (15) with tensioning devices (11) are arranged on both sides of said gear housing (16).

17. Rigid-axle body according to one of the Claims 1 to 16, **characterised in that** the wire cables (4, 5) have limited extensibility.

## Revendications

1. Corps d'essieu rigide d'un véhicule à moteur, en particulier d'un véhicule industriel avec des points de raccordement pour supports de roue sur les extrémités du corps d'essieu et des points de réception de poids pour recevoir les charges statiques et dynamiques résultant du cadre du véhicule et de la carrosserie du véhicule, **caractérisé en ce que** des câbles métalliques (4, 5), qui s'étendent dans le sens longitudinal du corps d'essieu vers les deux côtés d'un plan médian longitudinal de corps d'essieu (6) vertical, sont fixés à des points de fixation de câbles (9) à proximité des extrémités du corps d'essieu et s'appuient au corps d'essieu par le biais d'une prétension mécanique aux points de transmission du poids (7, 8 ; 15).

2. Corps d'essieu rigide selon la revendication 1, **caractérisé en ce que** les câbles métalliques (4, 5) sont guidés dans des guides-câbles au niveau des points de transmission de poids (7, 8 ; 15) pour contrer une élongation latérale.

3. Corps d'essieu rigide selon la revendication 1 ou 2, **caractérisé en ce que** les points de transmission de poids (7, 8) sont disposés au milieu du corps d'essieu et symétriquement par rapport au milieu du corps d'essieu.

4. Corps d'essieu rigide selon l'une des revendications 1 à 3, **caractérisé en ce que** les points de transmission de poids (7) disposés symétriquement par rapport au milieu du corps d'essieu sont disposés entre les points de fixation des câbles (9) et les points de réception de poids (3).

5. Corps d'essieu rigide selon l'une des revendications 1 à 4, **caractérisé en ce que** le point de transmission de poids (8) disposé au milieu du corps d'essieu est formé comme bascule.

6. Corps d'essieu rigide selon la revendication 5, **caractérisé en ce que** la bascule présente une articulation à rotule.

7. Corps d'essieu rigide selon l'une des revendications 1 à 6, **caractérisé en ce qu'**au niveau du point de transmission de poids (8) disposé au milieu du corps d'essieu est prévu un dispositif de tension (11) permettant de produire la prétension mécanique.

8. Corps d'essieu selon l'une des revendications 1 à 7, **caractérisé en ce que** les points de transmission de poids (7) sont conçus comme supports en forme de plaque moulée selon la forme du profilé de l'essieu, dans lesquels sont prévus à chaque fois les guides-câbles au niveau des extrémités inférieures.

9. Corps d'essieu rigide selon la revendication 8, **caractérisé en ce que** la section du profilé d'essieu présente approximativement une forme en U au niveau des supports moulés.

10. Corps d'essieu rigide selon l'une des revendications 1 à 7, **caractérisé en ce que** le point de transmission de poids (8) disposé au milieu du corps d'essieu est formé du dispositif de tension (11).

11. Corps d'essieu rigide selon l'une des revendications 1 à 10, **caractérisé en ce que** le dispositif de tension (11) présente un étrier de tension (12) approximativement en forme de U avec des manilles de tension de chaque côté, auquel cas des guides-câbles (18) sont prévus aux extrémités de la manille de tension (13), et **en ce que** l'étrier de tension (12) peut être réglé par rapport au corps d'essieu pour tendre les câbles métalliques (4, 5) au moyen d'une vis de tension.

12. Corps d'essieu rigide selon les revendications 6 et 11, **caractérisé en ce que** l'articulation à rotule (10) est prévue entre la vis de tension (14) et l'étrier de tension (12).

13. Corps d'essieu rigide selon les revendications 6 et 11, **caractérisé en ce que** l'articulation à rotule (10) est prévue entre la vis de tenson (14) et le corps d'essieu (1).

14. Corps d'essieu rigide selon l'une des revendications 11 à 13, **caractérisé en ce que** la vis de tension (14) est vissée dans un taraudage du corps d'essieu (1) ou de l'étrier de tension (12).

15. Corps d'essieu rigide selon l'une des revendications 1 à 14, **caractérisé en ce que** le corps d'essieu (1) est coudé vers le bas et le dispositif de tension (11) est disposé au milieu du coude.

16. Corps d'essieu rigide selon l'une des revendications 1 à 14, **caractérisé en ce que** le corps d'essieu (1) présente un carter d'engrenages (16) dans sa partie médiane, aux deux côtés duquel sont disposés les points de transmission de poids (15) avec des dispositifs de tension (11).

17. Corps d'essieu rigide selon l'une des revendications 1 à 16, **caractérisé en ce que** les câbles métalliques (4, 5) sont des câbles métalliques à faible allongement
